# EUROPÄISCHE PATENTSCHRIFT

(11) **EP 0 577 976 B1**
(45) Veröffentlichungstag und Bekanntmachung des Hinweises auf die Patenterteilung: **30.08.1995**
(21) Anmeldenummer: 93108970.0
(22) Anmeldetag: 04.06.1993
(51) Int. Cl.: F16B 7/04

(54) **Klemmvorrichtung**
Clamping device
Dispositif de serrage

(30) Priorität: 09.06.1992 DE 4218842
(43) Veröffentlichungstag der Anmeldung: 12.01.1994
(73) Patentinhaber: Offenbroich, Adrian, D-4000 Düsseldorf (DE)
(72) Erfinder: Offenbroich, Adrian, D-4000 Düsseldorf (DE)
(74) Vertreter: Stenger, Watzke & Ring Patentanwälte

(56) Entgegenhaltungen:
- CH-A- 581 274
- DE-B- 1 675 649
- FR-A- 2 137 405
- FR-A- 2 484 567
- FR-A- 2 599 096
- GB-A- 2 049 093

## Beschreibung

Gegenstand der Erfindung ist zunächst eine Klemmvorrichtung zum lösbaren Verbinden von zwei Profilstücken, von denen eines eine hinterschnittene Längsnut hat und das andere ein kastenförmiges Hohlprofil aufweist, in das ein Klemmstück mit einem in die Längsnut eingreifenden und diese begrenzende Lippen hintergreifenden Hammerkopf eingesetzt ist, wobei das Klemmstück über ein formstabiles, hakenförmiges Kopfstück verfügt, an dessen Stirnseite der Hammerkopf befestigt und an dessen Innenseite eine quer zur Längsachse des Klemmstücks verlaufende Schrägfläche ausgebildet ist, mit der eine Klemmschraube mit konischer Spitze zusammenwirkt, die durch eine Öffnung in dem Hohlprofil zugänglich ist, wobei das kastenförmige Hohlprofil ferner ein flaches Zugstück aufnimmt, zu dem das Kopfstück entgegen einer Federkraft parallel verschiebbar ist und in das die Klemmschraube in Richtung auf die Schrägefläche eingesetzt ist, und
wobei das Klemmstück einteilig ausgebildet ist und aus dem Kopfstück, dem Zugstück sowie einer Kopfstück und Zugstück verbindenden, um mindestens 180° gebogenen, federnden Schlaufe besteht, deren Elastizität ausreicht, um bei einem Lösen der Klemmschraube das Kopfstück mit dem Hammerkopf zu lüften.

Gegenstand der Erfindung gemäß Anspruch 2 ist ferner eine Klemmvorrichtung zum lösbaren Verbinden von zwei Profilstücken, von denen eines eine hinterschnittene Längsnut hat und das andere ein kastenförmiges Hohlprofil aufweist, in das ein Klemmstück mit einem in die Längsnut eingreifenden und diese begrenzende Lippen hintergreifenden Hammerkopf eingesetzt ist, wobei das Klemmstück über ein formstabiles, hakenförmiges Kopfstück verfügt, an dessen Stirnseite der Hammerkopf befestigt ist und an dessen Innenseite eine quer zur Längsachse des Klemmstücks verlaufende Schulter ausgebildet ist, mit der ein Exzenter zusammenwirkt, der durch eine Öffnung in dem Hohlprofil zugänglich ist, wobei das kastenförmige Hohlprofil ferner ein flaches Zugstück aufnimmt, zu dem das Kopfstück entgegen einer Federkraft parallel verschiebbar ist und in das der Exzenter in Richtung auf die Schulter eingesetzt ist, und
wobei das Klemmstück einteilig ausgebildet ist und aus dem Kopfstück, dem Zugstück sowie einer Kopfstück und Zugstück verbindenden, um mindestens 180° gebogenen, federnden Schlaufe besteht, deren Elastizität ausreicht, um bei einem Lösen des Exzenters das Kopfstück mit dem Hammerkopf zu lüften.

Eine Klemmvorrichtung der zuerst genannten Art ist aus der US-A-3 537 736 bekannt. Sie ist relativ aufwendig aufgebaut und besteht aus einem die Klemmschraube aufnehmenden Einsatzstück, einem hierzu axial beweglichen Gleitstück mit angeformtem Hammerkopf, der Klemmschraube sowie einer Feder, welche das Einsatzstück gegenüber dem Gleitstück abstützt.

Aus der DE-A-26 03 228 ist eine Klemmvorrichtung bekannt, die ebenfalls aus einem Einsatzstück, einen Bolzen mit dem angeformten Hammerkopf, einer Klemmschraube und einer Feder, also insgesamt vier Konstruktionsteilen besteht. Klemmvorrichtungen dieses Konstruktionsprinzips haben den Nachteil, daß der Bolzen beim Eindrehen der Klemmschraube gekippt wird, so daß der Hammerkopf bevorzugt nur mit einer Seite an dem anderen Profilstück anliegt.

Ferner ist aus der DE-C-29 41 008 eine Klemmvorrichtung zum lösbaren Verbinden von zwei Profilstücken bekannt, die mit einer Blattfeder arbeitet, welche am vorderen Ende mit gegensinnigen Haken in die Längsnuten des anderen Profilstückes eingreift und mit einem Exzenter gespannt wird. Diese Klemmvorrichtung hat den Nachteil, daß die Lippen der Längsnut in dem anderen Profilstück beschädigt werden können, wenn der Exzenter zu stark vorgespannt wird.

Davon ausgehend löst die Erfindung die **Aufgabe**, eine einfach konstruierte Klemmvorrichtung zu schaffen, die aus möglichst wenigen Einzelteilen zusammengesetzt ist.

Bei einer vorteilhaften Ausführungsform beider technischer Lösungen kann das Zugstück mit einem an seiner Außenseite um die Klemmschraube bzw. den Exzenter herum verlaufenden Bund in die Öffnung des Hohlprofiles eingreifen, um ein Widerlager in dem Hohlprofil zu schaffen.

In weiterer Ausgestaltung der Erfindung können das Kopfstück und das Zugstück zwischen dem Hammerkopf und der Klemmschraube bzw. dem Exzenter im Abstand eines Spannweges S voneinander getrennt sein, der etwas größer ist als der maximale Spannweg des Hammerkopfes.

Zur Entlastung des Hohlprofiles von Druckbeanspruchungen, die vom Klemmstück ausgehen, wird weiterhin vorgeschlagen, das Zugstück am vorderen Ende mit einer Abkröpfung zu versehen, die das Kopfstück untergreift. Dadurch werden die beim Klemmen im Klemmstück erzeugten Zug- und Druckkräfte im Klemmstück selbst eliminiert.

In weiterer Ausgestaltung der Erfindung kann in das Zugstück eine Buchse zur Aufnahme der Klemmschraube bzw. des Exzenters eingesetzt sein. Dabei ragt die Buchse anstelle des Zugstückes in die Öffnung des Hohlprofiles hinein.

Zur Verbesserung der Elastizität kann die Schlaufe vom Kopfstück ausgehend am Anfang wellenförmig gebogen sein.

Zur Verbesserung der Kraftübertragung zwischen Klemmschraube bzw. Exzenter und Schrägfläche kann in die Schrägfläche ein Stahlbolzen oder eine Stahlschulter eingesetzt sein.

Eine erfindungsgemäß ausgebildete Klemmvorrichtung hat den **Vorteil,** daß sie im Prinzip aus nur zwei einzelnen Konstruktionsteilen, nämlich dem Klemmstück und der Schraube bzw. dem Exzenter besteht, die einfach gehandhabt werden können. In beiden Ausführungsformen wird der Hammerkopf mit dem Kopfstück parallel zum Hohlprofil angezogen, so daß die Lippen des anderen Profilstückes auch gleichmäßig mit den Druckflächen des Hammerkopfes belastet werden.

Weitere Einzelheiten und Vorteile ergeben sich aus der nachfolgenden Beschreibung der zugehörigen Zeichnungen, in denen zwei verschiedene Ausführungsbeispiele mit einer Klemmschraube dargestellt worden sind. In den Zeichnungen zeigen:
- Fig. 1: Eine Klemmvorrichtung in Draufsicht;
- Fig. 2: dieselbe Klemmvorrichtung entlang der Linie II-II in Fig. 1 geschnitten in Seitenansicht;
- Fig. 3: eine vergrößerte Darstellung eines Klemmstückes mit Klemmschraube ohne die beiden Profilstücke im Längsschnitt.

In einem ersten Profilstück 1 ist eine hinterschnittene Längsnut 2 angeordnet, die von Lippen 3 begrenzt wird. Mit dem Profilstück 1 ist ein zweites Profilstück 4 verbunden, welches ein Hohlprofil 5 aufweist.

In dem Hohlprofil 5 steckt ein Klemmstück 6, welches mit einem Hammerkopf 7 in die Längsnut 2 eingreift und deren beide Lippen 3 hintergreift.

Das Klemmstück 6 besteht aus einem hakenförmigen Kopfstück 8, einer elastisch federnden Schlaufe 9 und einem Zugstück 10, die fortlaufend miteinander verbunden sind. An der Stirnseite des Kopfstückes 8 ist der Hammerkopf 7 befestigt. An der Innenseite des Kopfstückes 8 ist eine Schrägfläche 11 ausgebildet, die über eine Welle 12 in die elastische Schlaufe 9 übergeht. Auf dem Zugstück 11 ist ein Bund 13 vorgesehen, der sich in einer Öffnung 14 des Profilstückes 4 abstützt. Zentrisch zu dem Bund 13 ist eine Klemmschraube 15 angeordnet, die mit einem Konus auf die Schrägfläche 11 trifft.

Zwischen dem einwärtsgerichteten Ende des Kopfstückes 8 und dem auswärtsgerichteten Ende des Zugstückes 10 ist ein Spannweg S vorgesehen, der etwas größer ist als das Bewegungsspiel des Hammerkopfes 7 in der Längsnut 2.

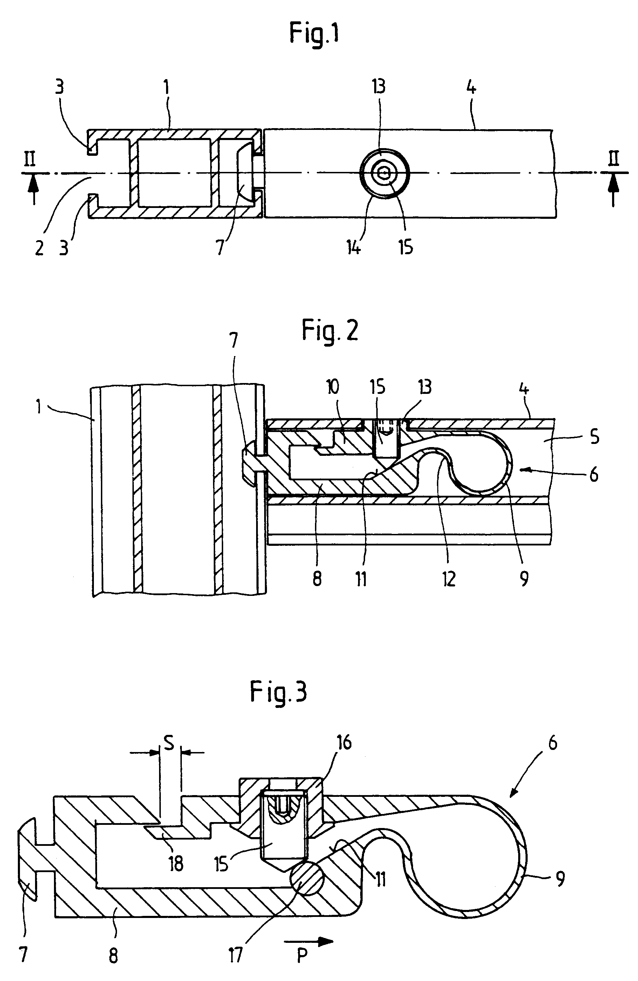

Bei dem Ausführungsbeispiel gemäß Fig. 3 ist in das Zugstück 10 eine Buchse 16 eingesetzt, welche die Klemmschraube 15 aufnimmt. Außerdem ist in die Schrägfläche 11 ein Stahlbolzen 17 eingesetzt, die mit dem Konus der Klemmschraube 15 zusammenwirkt.

Das vordere Ende des Zugstückes 10 kann mit einer Abkröpfung 18 versehen sein, welche das einwärtsgerichtete Ende des Kopfstückes 8 untergreift.

Um das Klemmstück 6 in das Hohlprofil 5 einsetzen zu können, wird zunächst die Klemmschraube 15 herausgedreht oder bis zum Anschlag in der Buchse 16 hochgedreht, damit zwischen dem Konus der Klemmschraube 15 und der Schrägfläche 11 bzw. dem Stahlbolzen 17 genügend Spiel entsteht, um das Zugstück 11 nach innen drücken und den Bund 13 bzw. die Buchse 16 in die Öffnung 14 einrasten zu können. Danach wird das Profilstück 4 mit dem Hammerkopf 7 in das Profilstück 1 eingesetzt. Wenn dann die Klemmschraube 15 gegen die Schrägfläche 11 bzw. den Bolzen 17 gedreht wird, verschiebt sich das Kopfstück 8 in Richtung des Pfeiles P, weil sich der Bund 13 bzw. die Buchse 16 in der Öffnung 14 des Profilstückes 4 abstützen. Sobald die Klemmschraube 15 gelöst wird, ist die innere Elastizität der Schlaufe 9 ausreichend, um den Hammerkopf 7 zu lüften. Danach können die beiden Profilstücke 1,4 voneinander gelöst werden.

Das Klemmstück 6 wird einschließlich des Hammerkopfes 7 als Profil gezogen und dann auf entsprechende Breite abgeschnitten. An dem gezogenen Profil liegen die freien Kanten des Kopfstückes 8 und des Zugstückes 10 in geringem Abstand übereinander. Bei den auf eine bestimmte Breite abgeschnittenen Rohlingen ist das ebenfalls der Fall. Um das Zugstück 10 leichter in das Kopfstück 8 einschnappen zu können, sind die freien Kanten parallel zueinander angeschrägt.

### Bezugszeichenliste

- 1: Profilstück
- 2: Längsnut
- 3: Lippe
- 4: Profilstück
- 5: Hohlprofil
- 6: Klemmstück
- 7: Hammerkopf
- 8: Kopfstück
- 9: Schlaufe
- 10: Zugstück
- 11: Schrägfläche
- 12: Welle
- 13: Bund
- 14: Öffnung
- 15: Klemmschraube
- 16: Buchse
- 17: Stahlbolzen
- 18: Abkröpfung
- S: Spannweg
- P: Pfeil

## Patentansprüche

1. Klemmvorrichtung zum lösbaren Verbinden von Zwei Profilstücken (1,4), von denen eines (1) eine hinterschnittene Längsnut (2) hat und das andere (4) ein kastenförmiges Hohlprofil (5) aufweist, in das ein Klemmstück (6) mit einem in die Längsnut (2) eingreifenden und diese begrenzende Lippen hintergreifenden Hammerkopf (7) eingesetzt ist, wobei das Klemmstück (6) über ein formstabiles, hakenförmiges Kopfstück (8) verfügt, an dessen Stirnseite der Hammerkopf (7) befestigt und an dessen Innenseite eine quer zur Längsachse des Klemmstücks (6) verlaufende Schrägfläche (11) ausgebildet ist, mit der eine Klemmschraube (15) mit konischer Spitze zusammenwirkt, die durch eine Öffnung (14) in dem Hohlprofil (4) zugänglich ist, wobei das kastenförmige Hohlprofil (5) ferner ein flaches Zugstück (10) aufnimmt, zu dem das Kopfstück (8) entgegen einer Federkraft parallel verschiebbar ist und in das die Klemmschraube (15) in Richtung auf die Schrägfläche (11) eingesetzt ist, und wobei das Klemmstück (6) einteilig ausgebildet ist und aus dem Kopfstück (8), dem Zugstück (10) sowie einer Kopfstück (8) und Zugstück (10) verbindenden, um mindestens 180° gebogenen, federnden Schlaufe (9) besteht, deren Elastizität ausreicht, um bei einem Lösen der Klemmschraube (15) das Kopfstück (8) mit dem Hammerkopf (7) zu lüften.

2. Klemmvorrichtung nach Anspruch 1, wobei das hakenförmige Kopfstück (8) anstelle einer an dessen Innenseite ausgebildeten, quer zur Längsachse des Klemmstücks (6) verlaufenden Schrägfläche (11) eine quer zur Längsachse des Klemmstücks (6) verlaufende Schulter hat, mit welcher ein Exzenter zusammenwirkt, und wobei das Lüften des Kopfstücks (8) mit dem Hammerkopf (7) durch Lösen des Exzenters erfolgt.

3. Klemmvorrichtung nach den Ansprüchen 1 oder 2, dadurch gekennzeichnet, daß das Zugstück (10) mit einem an seiner Außenseite um die Klemmschraube (15) bzw. den Exzenter herum verlaufenden Bund (13) in die Öffnung (14) des Hohlprofiles (5) eingreift.

4. Klemmvorrichtung nach den Ansprüchen 1 oder 2, dadurch gekennzeichnet, daß das Kopfstück (8) und das Zugstück (10) zwischen dem Hammerkopf (7) und der Klemmschraube (15) bzw. dem Exzenter im Abstand eine Spannweges S voneinander getrennt sind.

5. Klemmvorrichtung nach den Ansprüchen 1 oder 2, dadurch gekennzeichnet, daß das Zugstück (10) das Kopfstück (8) mit einer Abkröpfung (18) untergreift.

6. Klemmvorrichtung nach Anspruch 1, dadurch gekennzeichnet, daß in das Zugstück (10) eine Buchse (16) zur Aufnahme der Klemmschraube (15) eingesetzt ist.

7. Klemmvorrichtung nach Anspruch 6, dadurch gekennzeichnet, daß die Buchse (16) in die Öffnung (14) des Hohlprofiles (5) hineinragt.

8. Klemmvorrichtung nach den Ansprüchen 1 oder 2, dadurch gekennzeichnet, daß die Schlaufe (9) vom Kopfstück (8) ausgehend am Anfang wellenförmig gebogen ist.

9. Klemmvorrichtung nach Anspruch 1, dadurch gekennzeichnet, daß in die Schrägfläche (11) ein Bolzen (17) eingesetzt ist, mit dem die Spannschraube (15) zusammenwirkt.

## Claims

1. Clamping device for the releasable connection of two profile pieces (1, 4) of which one (1) has an undercut longitudinal groove (2) and the other (4) exhibits a box-shaped hollow profile (5) into which a clamping piece (6) is inserted by means of a hammer head (7) which engages into the longitudinal groove (2) and grips behind lips which delimit said longitudinal groove, the clamping piece (6) having a dimensionally stable, hook-shaped head piece (8), on whose end side the hammer head (7) is fastened, and on whose inner side there is formed an oblique surface (11) which runs transversely with respect to the longitudinal axis of the clamping piece (6) and with which a clamping screw (15) with a conical tip interacts, said screw being accessible through an opening (14) in the hollow profile (5), the box-shaped hollow profile (5), furthermore, receiving a flat drawing piece (10), with respect to which the head piece (8) can be displaced in parallel counter to a spring force and into which the clamping screw (15) is inserted in the direction of the oblique surface (11), and the clamping piece (6) being designed in one part and comprising the head piece (8), the drawing piece (10) and a resilient loop (9) which connects the head piece (8) and drawing piece (10), is bent through at least 180° and of which the elasticity is sufficient to provide air in the head piece (8) with the hammer head (7) when the clamping screw (15) is released.

2. Clamping device according to Claim 1, the hook-shaped head piece (8) having, instead of an oblique surface (11) which is formed on its inner side and runs transversely with respect to the longitudinal axis of the clamping piece (6), a shoulder which runs transversely with respect to the longitudinal axis of the clamping piece (6) and with which an eccentric interacts, and the head piece (8) with the hammer head (7) being provided with air by releasing the eccentric.

3. Clamping device according to Claim 1 or 2, characterized in that the drawing piece (10) engages into the opening (14) of the hollow profile (5) by means of a collar (13) which runs, on its outer side, around the clamping screw (15) and the eccentric.

4. Clamping device according to Claim 1 or 2, characterized in that the head piece (8) and the drawing piece (10) are separated from one another between the hammer head (7) and the clamping screw (15) and the eccentric by the distance of a clamping path S.

5. Clamping device according to Claim 1 or 2, characterized in that the drawing piece (10) grips beneath the head piece (8) by means of a bent-off portion (18).

6. Clamping device according to Claim 1, characterized in that a bushing (16) for receiving the clamping screw (15) is inserted into the drawing piece (10).

7. Clamping device according to Claim 6, characterized in that the bushing (16) projects into the opening (14) of the hollow profile (5).

8. Clamping device according to Claim 1 or 2, characterized in that the loop (9), extending from the head piece (8), is bent in the form of a wave at the beginning.

9. Clamping device according to Claim 1, characterized in that a bolt (17) with which the clamping screw (15) interacts is inserted into the oblique surface (11).

## Revendications

1. Dispositif de serrage pour créer une liaison détachable entre deux éléments profilés (1, 4) dont l'un (1) comporte une rainure longitudinale en décrochement (2) et l'autre (4) présente un profil creux en caisson (5) dans lequel est logée une pièce de serrage (6) comprenant une tête en T (7) qui est insérée dans la rainure longitudinale (2) et qui est engagée derrière des lèvres délimitant ladite rainure, la pièce de serrage (6) comportant une partie de tête indéformable (8) en forme de crochet, sur la face frontale de laquelle est fixée la tête en T (7) et sur le côté intérieur de laquelle est prévu un plan incliné (11) qui s'étend transversalement à l'axe longitudinal de la pièce de serrage (6) et avec lequel coopère une vis de serrage (15) à pointe conique accessible par un orifice (14) du profil creux (4), le profil creux en caisson (5) comportant également une pièce plate de traction (10) parallèlement à laquelle la partie de tête (8) peut se déplacer à l'encontre d'une force élastique et que la vis de serrage (15) traverse en direction du plan incliné (11), la pièce de serrage (6) étant réalisée d'un seul tenant et constituée de la partie de tête (8), de la pièce de traction (10) ainsi que d'une boucle élastique (9) qui relie la partie de tête (8) et la pièce de traction (10) et est courbée à au moins 180° et donc l'élasticité suffit pour débloquer la partie de tête (8) munie de la tête en T (7) en desserrant la vis de serrage (15).

2. Dispositif de serrage selon la revendication 1, dans lequel la partie de tête en forme de crochet (8) comporte, en lieu et place d'un plan incliné (11) disposé sur son côté intérieur et orienté transversalement à l'axe longitudinal de la pièce de serrage (6), un épaulement qui s'étend transversalement à l'axe longitudinal de la pièce de serrage (6) et avec lequel coopère un excentrique, le déblocage de la partie de tête (8) munie de la tête en T (7) s'effectuant en desserrant l'excentrique.

3. Dispositif de serrage selon les revendications 1 ou 2, caractérisé en ce que la pièce de traction (10) pénètre dans l'orifice (14) du profil creux (5) au moyen d'un collet (13) qui est disposé sur sa face extérieure et qui entoure la vis de serrage (15) ou l'excentrique.

4. Dispositif de serrage selon les revendications 1 ou 2, caractérisé en ce que, entre la tête en T (7) et la vis de serrage (15) ou l'excentrique, la partie de tête (8) et la pièce de traction (10) sont séparées l'une de l'autre par une course de serrage S.

5. Dispositif de serrage selon les revendications 1 ou 2, caractérisé en ce que la pièce de traction (10) passe en dessous de la partie de tête (8) au moyen d'une partie coudée (18).

6. Dispositif de serrage selon la revendication 1, caractérisé en ce qu'une douille (16) est logée dans la pièce de traction (10) pour recevoir la vis de serrage (15).

7. Dispositif de serrage selon la revendication 6, caractérisé en ce que la douille (16) pénètre dans l'orifice (14) du profil creux (5).

8. Dispositif de serrage selon les revendications 1 ou 2, caractérisé en ce que l'amorce de la boucle (9) à partir de la partie de tête (8) présente une courbure ondulée.

9. Dispositif de serrage selon la revendication 1, caractérisé en ce que dans le plan incliné (11) est logé un axe (17) avec lequel coopère la vis de serrage (15).
